# EUROPEAN PATENT SPECIFICATION

(11) **EP 0 760 755 B1**
(45) Date of publication and mention of the grant of the patent: **11.08.1999**
(21) Application number: 95921189.7
(22) Date of filing: 12.05.1995
(51) Int. Cl.: B60R 9/058

(54) **A DEVICE IN LOAD CARRIERS**
VORRICHTUNG FÜR LASTTRÄGER
DISPOSITIF POUR UN PORTE-CHARGE

(30) Priority: 25.05.1994 SE 9401788
(43) Date of publication of application: 12.03.1997
(73) Proprietor: Industri AB Thule, S-330 33 Hillerstorp (SE)
(72) Inventor: LUNDGREN, Anders, S-510 94 Grimsas (SE)
(74) Representative: Wallengren, Yngvar
(86) International application number: SE9500527
(87) International publication number: WO9532105

(56) References cited:
- WO-A-94/00315
- DE-C- 3 405 357
- FR-A- 2 413 852
- GB-A- 2 221 664

## Description

### TECHNICAL FIELD

The present invention relates to a device in a load carrier of the type which comprises a load carrier strut extending over the vehicle roof and having, at each end, a foot for securing and supporting the load carrier on the vehicle, the foot having a footplate which is pivotal about an axis longitudinal in relation to the vehicle, the footplate being intended for abutment against the vehicle roof, and a clamping device for fixedly clamping the load carrier.

### BACKGROUND ART

Load carriers of the type mentioned by way of introduction are previously known in any number of variations. As a rule, the footplate is secured in the foot of the load carrier via a hinge or linkage arrangement in which the pivot axis of the linkage or hinge is substantially parallel with a horizontal axis in the longitudinal direction of the vehicle. Hereby, the foot of the load carrier and the footplate can be pre-set at an angle in relation to the slope of the vehicle roof in its edge region.

The above-outlined construction functions satisfactorily in many contexts, but cannot without substantial drawbacks be employed in such designs where the vehicle roof slopes very shallowly or not at all, in the region where the footplate provides its support. Because of the flatness of the vehicle roof in this region, the load carrying capacity of the roof is poor, and so there is an obvious risk that the footplate be urged so hard against the vehicle roof that this is deformed and suffers from permanent damage. The problem becomes aggravated the further in from the vehicle roof edge the footplate urges against the roof. In this type of vehicle roof, it is therefore desirable that the loading from the footplate on the vehicle roof acts as close to the edge of the vehicle roof as possible where it still has a certain arching and thereby greater load carrying capacity. The problem can be described as the converse in such roof designs where the roof slopes steeply in the edge area inwards towards a region above the longitudinal centre line of the vehicle. The object here is instead to provide a load carrying capacity as far in on the roof as possible, since the geometric clamping relationship of the load carrier foot will then be better. In return, a roof which slopes and is arched in this manner is considerable more rigid and is consequently better capable of withstanding the loadings involved.

Constructions are also previously known in the art in which attempts are made to obviate the above-outlined drawbacks by a pre-setting of the angle between the footplate and the load carrier foot with the aid of special adapters. Such a pre-setting implies either that the adapters must be modified to suit the vehicle and thus be sold as special accessories to each vehicle model, or that the adapters must be mounted in place in accurately and carefully indicated positions. Adapters of this type do not, therefore, constitute an attractive solution to this problem.

A device having the features of the preamble of Claim 1 is known from FR-A-2 413 852.

### PROBLEM STRUCTURE

The present invention has for its object to design the device intimated by way of introduction such that the drawbacks inherent in the prior art designs and constructions are obviated. In particular, the present invention has for its object to realise a device which permits a footplate to abut close to the edge region of a vehicle roof when the slope of the vehicle roof is very shallow, or when there is no slope at all in this region, while the load transferring portion of the footplate to the vehicle roof is displaced inwardly from the edge region of the vehicle roof when the roof slope is steeper. Thus, the present invention has for its object to design the device disclosed by way of introduction such that the loading on the footplate is rolled-over onto the vehicle roof from the edge region of the roof in an inward direction towards the centre of the vehicle according as the roof slope increases. Furthermore, the present invention also has for its object to realise a device which is simple and economical to manufacture and which is extremely reliable in operation.

### SOLUTION

The objects forming the basis of the present invention will be attained if the device intimated by way of introduction is characterized in that the footplate and the foot have two support surfaces which are pairwise movable into load-transferring cooperation with one another, that the pairs of support surfaces are located in spaced apart relationship from one another in the lateral direction of the vehicle and thereby form an outer pair most proximal the edge of the vehicle roof and an inner pair at greater spaced apart relationship, and that the position for cooperation is movable between the pairs by a mutual rotation of the footplate and the foot about the axis of rotation which is longitudinal in relation to the vehicle.

As a result of this design and construction, the load-transferring cooperation between the foot and the footplate will lie at that portion of the footplate located most proximal the vehicle roof when the slope of the vehicle roof is shallow, while the load-transferring cooperation between the foot and the footplate will be moved in closer to the longitudinal centre line of the vehicle when the roof slope increases.

Further advantages will be attained according to the invention if the device as disclosed herein is also given one or more of the characterizing features as set forth in appended Claims 2 to 10.

### BRIEF DESCRIPTION OF THE ACCOMPANYING DRAWINGS

The present invention will now be described in greater detail hereinbelow, with particular reference to the accompanying Drawings, in which:
- Fig. 1: is a vertical side elevation of a load carrier foot seen in the longitudinal direction of a load carrier strut in a direction in towards the centre of the vehicle;
- Fig. 2: is a section taken along the section marking A-A in Fig. 1 in a vehicle roof of shallow slope; and
- Fig. 3: is a corresponding section in a more steeply sloping vehicle roof.

### DESCRIPTION OF PREFERRED EMBODIMENT

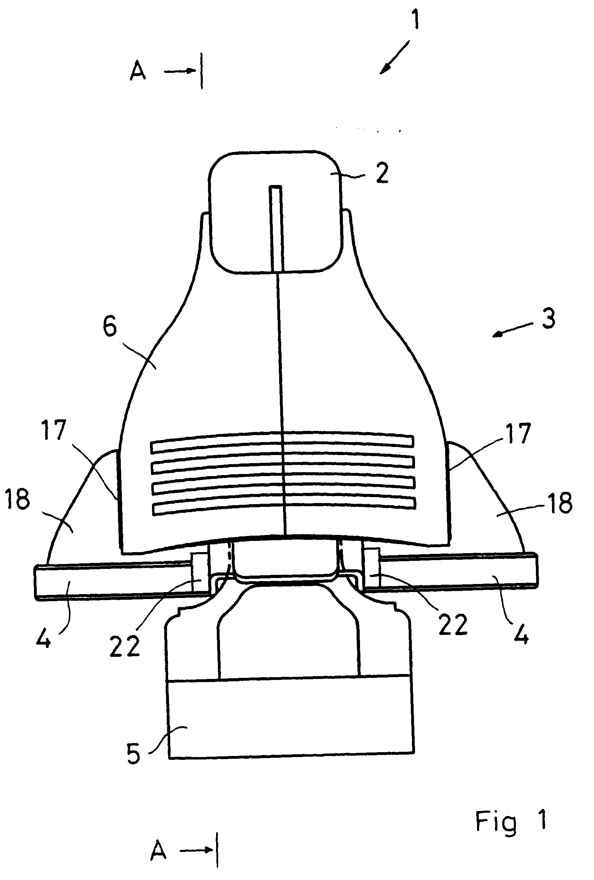

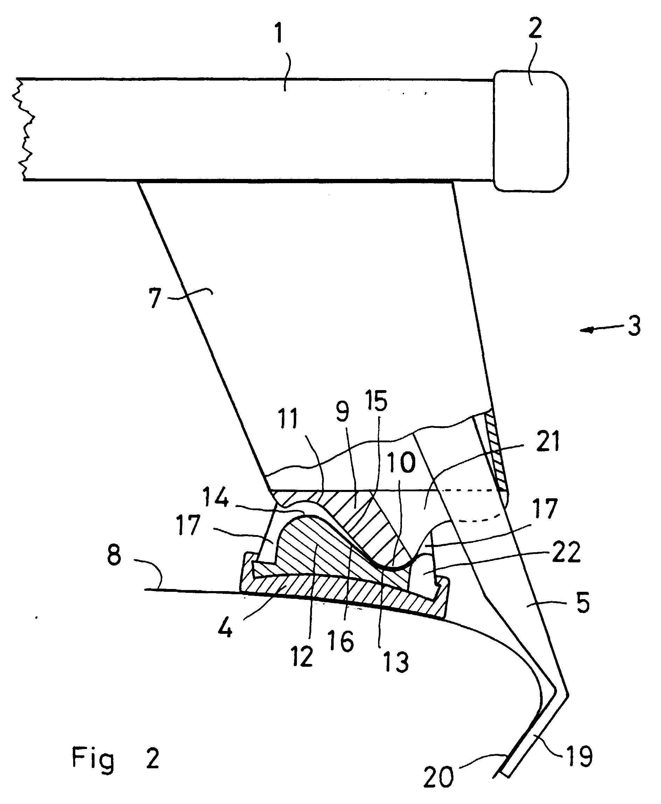

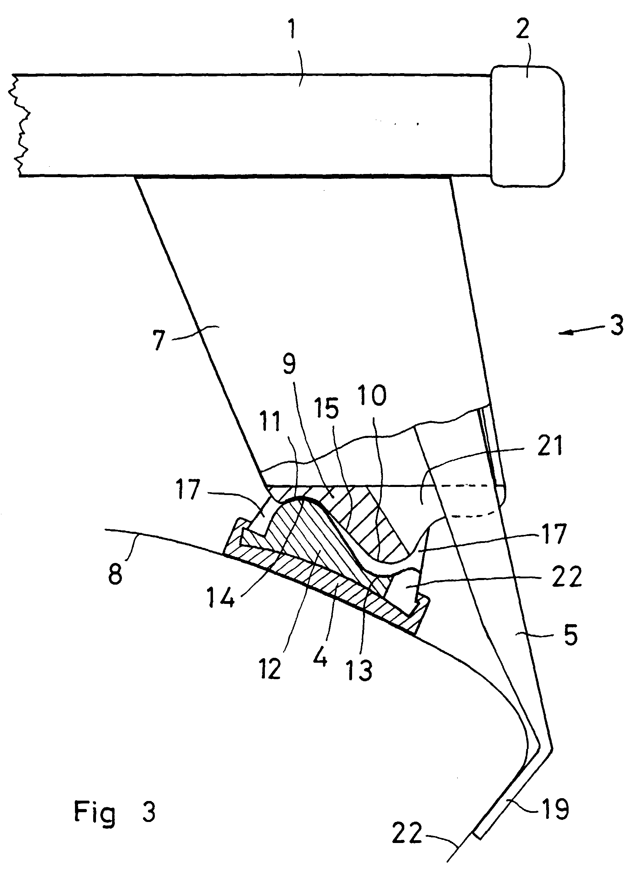

In Fig. 1, reference numeral 1 relates to a load carrier strut extending transversely over a vehicle roof and having an endpiece 2, the strut being secured in a foot 3 which serves for anchoring and supporting the load carrier on a vehicle roof. At its lower end region, the foot 3 has a footplate 4 which is intended to rest on the vehicle roof and transfer to the roof the loading on the load carrier. Furthermore, the foot 3 is provided with a clamping device 5 for fixedly clamping the load carrier on the vehicle roof by engaging with a region which is undercut seen from above at the side edge of the vehicle roof or with an anchorage device placed at this point. Under the action of a clamping member (not shown on the Drawings) accommodated in the foot 3, the clamping device 5 is movable in an upward direction towards the footplate 4 but, at the same time, in a lateral direction inwards, towards the longitudinal centre line of the vehicle, in Fig. 1 away from the observer of the Drawing, and in Figs. 2 and 3 in a direction to the left.

Fig. 2 shows a vertical partial section through the device according to the invention, taken approximately along the section marking A-A in Fig. 1. It should here be observed that the protective hood or cover 6 which surrounds the foot 3 proper in Fig. 1 has been removed so that only the body 7 of the foot is shown. Fig. 2 further shows a situation in which a vehicle roof, whose contour line is shown by reference numeral 8, is of but very shallow or flat slope in the lateral direction of the vehicle, in towards an area over the longitudinal centre line of the vehicle roof. Fig. 3 shows the same view but in which the slope of the vehicle roof is considerably steeper.

It will further be apparent from Figs. 2 and 3 that the body 7 of the foot 3 is provided, at its lower end, with a bottom portion 9 which has two support portions 10 and 11 extending in the longitudinal direction of the vehicle for cooperation with the footplate 4. Correspondingly, the footplate 4 has a body 12 produced of rigid material, this body having two support surfaces 13 and 14 which are longitudinal in relation to the vehicle and which are movable into load-transferring cooperation with the support surfaces 10 and 11, respectively, of the bottom portion 9. The support surfaces hereby form an outer pair 10 and 13; and an inner pair 11 and 14, in which "outer" relates to a position close to the edge of the vehicle roof, while "inner" relates to a position a slightly greater distance in towards the centre of the vehicle from the edge of the roof. The pairs 10 and 13; and 11 and 14 are thereby disposed a distance from one another seen in the lateral direction of the vehicle.

In the position illustrated in Fig. 2, the pair 10 and 13 of support surfaces cooperates with each other, the footplate 4 being relatively flat (horizontal direction) and abutting against the vehicle roof 8 close to its side edge area. Since the load-transferring cooperation takes place between the pair of support surfaces 10 and located most proximal the vehicle roof, the majority of the load carrier's loading against the vehicle roof will also impinge on the roof approximately in the area of the pair 10, 13 of support surfaces, i.e. relatively close to the edge of the vehicle roof.

In Fig. 2, the footplate 4 has been rotated or pivoted to an axis which is longitudinal in relation to the vehicle in a clockwise direction so that the slope of the footplate 4 will thereby be considerable towards an area above the vehicle roof at the central region of the roof. In this position, the support surfaces 11 and 14 cooperate with each other and, analogous with the foregoing description, it will be readily perceived that the loading from the load carrier will be substantially transferred to the vehicle roof 8 via the left part, i.e. inner portion of the footplate 4. The position of the load transfer to the vehicle roof will hereby be displaced inwards away from the edge region of the roof.

It will be apparent from the foregoing that the pairs of support surfaces are located in relation to one another such that, on cooperation between the outer pair 10 and 13, the underside of the footplate 4 can be approximately horizontal or be of insignificant slope up towards a region above the longitudinal centre line of the vehicle roof, while, in cooperation between the inner pair 11 and 14, the angle of slope is considerably larger and may amount to close on 40° in relation to the horizontal.

In order to permit the above-described roll-over of load transfer in an inward direction towards the vehicle centre when the slope of the footplate 4 increases, it is appropriate that the support surfaces within the pairs 10 and 11 and 13 and 14 be substantially complementary and preferably encompass parts of cylindrical surfaces where the longitudinal axis of the cylinder is substantially parallel with the longitudinal axis of the vehicle. Between the pairs of support surfaces, both the bottom plate and the body 12 have connecting surfaces 15 and 16, respectively, whereby the profiles of the bottom plate 9 and the body 12 will be approximately S-shaped in cross section. The positioning of the support surfaces 10 and 13 and 11 and 14, respectively, as well as the connecting surfaces 15 and 16, is such that engagement may take place simultaneously between all surfaces in an intermediate position of the slope of the footplate 4.

The above-mentioned cylindrical portions of the support surfaces 10 and 11 on the foot 3, or these support portions in their entirety, have centre lines which are parallel with one another and which, in the vertical direction, are placed at approximately the same distance from the load carrier strut 1. On the other hand, on the footplate the distance for the centre lines to the support surfaces 13 and 14 is located such that the space from the underside of the footplate to the centre line of the outer support surface 13 is greater than the distance between the underside of the footplate 4 and the centre line of the inner support surface 14.

In order to prevent displacement in the longitudinal direction of the vehicle between the foot 3 and the footplate 4, the footplate and the foot are provided with mutually engaging arrest surfaces, where the arrest surfaces 17 on the footplate 4 are transversely directed in relation to the longitudinal axis of the vehicle and thereby also transversely directed or preferably at right angles to the centre axes of the cylindrical portions of the support surfaces. The arrest surfaces 17 of the footplate 4 are disposed on projections 18 upwardly directed from the upper side of the footplate, the projections being placed, in the longitudinal direction of the vehicle, in front of and behind the foot 3 and abutting against the forward and rear defining surfaces of the foot. While not being apparent from the Drawings, it is the bottom plate 9 of the foot 3 that has its end surfaces (front and rear end surfaces in the longitudinal direction of the vehicle) designed as arrest surfaces in abutment against the arrest surfaces 17 of the footplate 4.

The clamping device 5 has, as is apparent from Figs. 2 and 3, the form of a catch 19 which grasps beneath an undercut surface 22 in the edge region of the vehicle roof 8. Alternatively, the clamping device 5 may be designed for cooperation with specific anchorages placed in the region at the undercut surfaces 22. In order to permit the requisite movements of the clamping devices 5, the bottom plate 9 is provided with a recess 21 in its central region. Correspondingly, the footplate 4 has, in its central region, a recess 22 for the same purpose.

In order to prevent the footplate 4 from falling off when the load carrier is mounted in place, or when the load carrier is handled in the unmounted state, the arrest surfaces 17 of the footplate and the corresponding arrest surfaces of the foot 3 are ideally provided with means which retain the footplate on the foot 3 without in any way obstructing their mutual adjustments and setting.

The present invention may be modified without departing from the scope of the appended Claims.

## Claims

1. A device in a load carrier of the type which comprises a load carrier strut (1) extending over a vehicle roof (8) and having, at each end, a foot (3) for securing and supporting the load carrier on the vehicle, the foot having a footplate (4) which is pivotal about an axis longitudinal in relation to the vehicle, the footplate being intended for abutment against the vehicle roof, and a clamping device (5) for fixedly clamping the load carrier, **characterized in that** the footplate (4) and the foot (3) have two support surfaces (13, 14 and 10, 11, respectively) which are pairwise movable into load-transferring cooperation with one another; **that** the pairs of support surfaces are located in spaced apart relationship from one another in the lateral direction of the vehicle and thereby form an outer (10, 13) pair most proximal the edge of the vehicle roof and an inner (11, 14) pair at greater spaced apart relationship; **and that** the position for cooperation is movable between the pairs by a mutual rotation of the footplate (4) and the foot (3) about the axis of rotation which is longitudinal in relation to the vehicle.

2. The device as claimed in Claim 1**, characterized in that** the pairs (10, 13 and 11, 14, respectively) of support surfaces are located in relation to one another such that, on cooperation with the outer pair (10, 13), the underside of the footplate (4) in the lateral direction of the vehicle is of approximately horizontal position or displays a minor upward sloping towards a region above the longitudinal centre line of the vehicle, while, on cooperation with the inner pair (11, 14), the slope is steeper.

3. The device as claimed in any one of Claims 1 or 2, **characterized in that** the support surfaces (10, 11, 13, 14) within each pair are substantially complementary.

4. The device as claimed in Claim 3, **characterized in that** the support surfaces (10, 11, 13, 14) include parts of cylindrical surfaces.

5. The device as claimed in any one of Claims 1 to 4, **characterized in that** the support surfaces (13, 14) on the footplate (4) together with an interjacent surface (16) are of S-shaped profile in cross section.

6. The device as claimed in any one of Claims 4 or 5, **characterized in that** the distance between the underside of the footplate (4) and the centre line of the outer support surface (13) of the footplate is greater than the distance between the underside and the centre line of the inner support surface (14).

7. The device as claimed in any one of Claims 4 to 6, **characterized in that** the distance between the load carrier strut (1) and the centre line of the outer support surface (10) of the foot (3) is approximately as large as the distance from the load carrier strut and the centre line of the inner support surface (11).

8. The device as claimed in any one of Claims 1 to 7, **characterized in that** the footplate (4) has, on its side facing towards the edge of the vehicle roof (8) and in the central region counting in the longitudinal direction, a recess (22) for accommodating the clamping device (5).

9. The device as claimed in any one of Claims 1 to 8**, characterized in that** the foot (3) and the footplate (4) have mutually engaging arrest surfaces (17) which are transversely directed in relation to the axis of rotation and which thereby prevent relative movement therealong.

10. The device as claimed in Claim 9**, characterized in that** the arrest surfaces (17) of the footplate (4) are disposed on projections (18) upwardly protruding from the upper side of the footplate, said projections being, in the longitudinal direction of the vehicle, located in front of and behind the foot (3) and abutting thereagainst.

## Patentansprüche

1. Vorrichtung bei einem Lastträger der Art, welcher aufweist: eine Lastträger-Strebe (1), die sich über ein Fahrzeugdach (8) erstreckt und an jedem Ende einen Fuß (3) zum Sichern und Stützen des Lastträgers an dem Fahrzeug hat, wobei der Fuß eine Fußplatte (4) aufweist, welche um eine in Längsrichtung bezüglich des Fahrzeugs verlaufende Achse drehbar ist, wobei die Fußplatte zur Anlage an dem Fahrzeugdach vorgesehen ist, und eine Festklemmvorrichtung (5) zum Festklemmen des Lastträgers, dadurch gekennzeichnet, daß die Fußplatte (4) und der Fuß (3) zwei Stützflächen (13, 14 bzw. 10, 11) haben, die paarweise in ein eine Last übertragendes Zusammenwirken miteinander bewegbar sind; daß die Stützflächenpaare in seitlicher Richtung des Fahrzeugs voneinander beabstandet angeordnet sind und dadurch ein äußeres (10, 13) Paar, welches so nahe wie möglich zu dem Rand des Fahrzeugdaches ist, und ein inneres (11, 14) Paar, welches weiter von diesem beabstandet ist, bilden; und daß die Position für ein Zusammenwirken zwischen den Paaren durch wechselseitige Rotation der Fußplatte (4) und des Fußes (3) um die Rotationsachse, welche in bezug auf das Fahrzeug in Längsrichtung verläuft, beweglich ist.

2. Vorrichtung nach Anspruch 1, dadurch gekennzeichnet, daß die Paare (10, 13 bzw. 11, 14) der Stützflächen in bezug zueinander dergestalt angeordnet sind, daß bei Zusammenwirken mit dem äußeren Paar (10, 13) die Unterseite der Fußplatte (4) in Längsrichtung des Fahrzeugs eine ungefähr horizontale Position hat oder eine leicht nach oben in Richtung eines Bereichs oberhalb der Längs-Mittellinie des Fahrzeugs geneigte Position aufweist, wohingegen bei Zusammenwirkung mit dem inneren Paar (11, 14) die Neigung steiler ist.

3. Vorrichtung nach einem der Ansprüche 1 oder 2, dadurch gekennzeichnet, daß die Stützflächen (10, 11, 13, 14) bei jedem Paar im wesentlichen komplementär sind.

4. Vorrichtung nach Anspruch 3, dadurch gekennzeichnet, daß die Stützflächen (10, 11, 13, 14) Teile von zylindrischen Flächen beinhalten.

5. Vorrichtung nach einem der Ansprüche 1 bis 4, dadurch gekennzeichnet, daß die Stützflächen (13, 14) an der Fußplatte (4) zusammen mit einer dazwischen liegenden Fläche (16) im Querschnitt ein S-förmiges Profil haben.

6. Vorrichtung nach Anspruch 4 oder 5, dadurch gekennzeichnet, daß der Anstand zwischen der Unterseite der Fußplatte (4) und der Zentralachse der äußeren Stützfläche (13) der Fußplatte größer ist als der Anstand zwischen der Unterseite und der Zentralachse der inneren Stützfläche (14).

7. Vorrichtung nach einem der Ansprüche 4 bis 6, dadurch gekennzeichnet, daß der Anstand zwischen der Lastträgerstrebe (1) und der Zentralachse der äußeren Stützfläche (10) des Fußes (3) ungefähr so groß ist wie der Abstand zwischen der Lastträgerstrebe und der Zentralachse der inneren Stützfläche (11).

8. Vorrichtung nach einem der Ansprüche 1 bis 7, dadurch gekennzeichnet, daß die Fußplatte (4) auf ihrer dem Rand des Fahrzeugdaches (8) zugewandten Seite und in dem Mittelbereich bezüglich der Längsrichtung eine Aussparung (22) zur Aufnahme der Klemmvorrichtung (5) aufweist.

9. Vorrichtung nach einem der Ansprüche 1 bis 8, dadurch gekennzeichnet, daß der Fuß (3) und die Fußplatte (4) gegenseitig eingreifende Sperrflächen (17) aufweisen, die in bezug auf die Rotationsachse quer verlaufen und dadurch eine relative Bewegung entlang dieser verhindern.

10. Vorrichtung nach Anspruch 9, dadurch gekennzeichnet, daß die Sperrflächen (17) der Fußplatte (4) an Vorsprüngen (18) angeordnet sind, die nach oben von der oberen Seite der Fußplatte vorstehen, wobei die Vorsprünge in Längsrichtung des Fahrzeugs vor und hinter dem Fuß (3) angeordnet sind und an diesem anliegen.

## Revendications

1. Dispositif pour un porte-charge du type qui comprend une barre de porte-charge (1) s'étendant au-dessus d'un toit de véhicule (8) et ayant, à chaque extrémité, un pied (3) de fixation et de support du porte-charge sur le véhicule, le pied comportant une semelle (4) qui peut pivoter autour d'un axe longitudinal par rapport au véhicule, la semelle étant prévue pour buter contre le poids du véhicule, et un dispositif de blocage (5) pour bloquer de façon fixe le porte-charge, caractérisé en ce que la semelle (4) et le pied (3) présentent deux surfaces de portée (13, 14 et 10, 11, respectivement) qui sont déplaçables en paires en coopération de transfert de charge les unes avec les autres ; en ce que les paires de surface de portée sont mutuellement espacées l'une de l'autre dans la direction latérale du véhicule et constituent ainsi une paire extérieure (10, 13) la plus proche du bord du toit du véhicule et une paire intérieure (11, 14) plus éloignée de ce bord ; et en ce que la position de coopération est déplaçable entre les paires par rotation mutuelle de la semelle (4) et du pied (3) autour de l'axe de rotation qui est longitudinal relativement au véhicule.

2. Dispositif selon la revendication 1, caractérisé en ce que les paires (10, 13 et 11, 14, respectivement) de surfaces de portée sont placées l'une par rapport à l'autre de sorte que, lors de la coopération avec la paire extérieure (10, 13), la face inférieure de la semelle (4) dans la direction latérale du véhicule est dans une position sensiblement horizontale ou présente une faible pente montante vers une région située au-dessus de l'axe longitudinal du véhicule tandis que, lors de la coopération avec la paire intérieure (11, 14), la pente est plus forte.

3. Dispositif selon une quelconque des revendications 1 ou 2, caractérisé en ce que les surfaces de portée (10, 11, 13, 14) dans chaque paire sont sensiblement complémentaires.

4. Dispositif selon la revendication 3, caractérisé en ce que les surfaces de portée (10, 11, 13, 14) comprennent des parties de surfaces cylindriques.

5. Dispositif selon une quelconque des revendications 1 à 4, caractérisé en ce que les surfaces de portée (13, 14) sur la semelle (4) en combinaison avec une surface intermédiaire (16) ont un profil en S en coupe transversale.

6. Dispositif selon une quelconque des revendications 4 ou 5, caractérisé en ce que la distance entre la face inférieure de la semelle (4) et l'axe de la surface de portée extérieure (13) de la semelle est plus grande que la distance entre la face inférieure et l'axe de la surface de portée intérieure (14).

7. Dispositif selon une quelconque des revendications 4 à 6, caractérisé en ce que la distance entre la barre de porte-charge (1) et l'axe de la surface de portée extérieure (10) du pied (3) est sensiblement aussi grande que la distance entre la barre de porte-charge et l'axe de la surface de portée intérieure (11).

8. Dispositif selon une quelconque des revendications 1 à 7, caractérisé en ce que la semelle (4) comporte, sur son côté tourné vers le bord du toit de véhicule (8) et dans la région centrale considérée dans la direction longitudinale, un évidement (22) pour le logement du dispositif de blocage (5).

9. Dispositif selon une quelconque des revendications 1 à 8, caractérisé en ce que le pied (3) et la semelle (4) présentent des surfaces d'arrêt en contact mutuel (17) qui sont dirigées transversalement à l'axe de rotation et qui empêchent ainsi un mouvement relatif le long de cet axe.

10. Dispositif selon la revendication 9, caractérisé en ce que les surfaces d'arrêt (17) de la semelle (4) sont disposées sur des saillies (18) s'étendant vers le haut à partir du côté supérieur de la semelle, lesdites saillies étant situées, dans la direction longitudinale du véhicule, à l'avant et à l'arrière du pied (3) et en butée contre celui-ci.
